# EUROPEAN PATENT APPLICATION

(11) **EP 4 631 756 A1**
(43) Date of publication of application: **15.10.2025**
(21) Application number: 25169798.3
(22) Date of filing: 10.04.2025
(51) Int. Cl.: B60K 5/02, B60K 13/04

(54) **ROAD CAR WITH SIDE EXHAUSTS**

(30) Priority: 11.04.2024 IT 202400008233
(71) Applicant: FERRARI S.p.A., 41100 Modena (IT)
(72) Inventor: TOLLARI, Davide, 41100 Modena (IT); FUMAROLA, Angelo, 41100 Modena (IT); MERULLA, Andrea, 41100 Modena (IT); MUCI, Roberto Fulvio, 41100 Modena (IT)
(74) Representative: Studio Torta S.p.A.

(57) **Abstract**

A road car has a passenger compartment (4), a front engine (10) mounted in front of the passenger compartment (4), two under-door side members (9a), each mounted under a relative access door (8) of the passenger compartment (4), a front axle provided with a pair of front wheels (7), a pair of side exhaust ducts (13), each at least partly extending between a relative under-door side member (9a) and a relative front wheel (7), being at least partly aligned with the relative front wheel (7) in a travel direction (6) of the road car and being configured to release the exhaust gases produced by the engine (10) and to at least limit the movement of the relative front wheel (7) following a front crash of the road car.

## Description

### CROSS-REFERENCE TO RELATED APPLICATIONS

This patent application claims priority from Italian patent application no. 102024000008233 filed on April 11, 2024, the entire disclosure of which is incorporated herein by reference.

### TECHNICAL FIELD

The invention relates to a road car.

### BACKGROUND

In particular, the invention relates to a road car comprising a support frame defining at least part of a lower floor of the road car; a passenger compartment projecting upwards from the lower floor; and a front engine mounted in front of the passenger compartment and in a central area of the road car.

The support frame comprises two under-door side members, each mounted under a relative access door of the passenger compartment, and a pair of front struts, which protrude from the passenger compartment parallel to a travel direction of the road vehicle and support a front axle provided with a pair of front wheels.

The support frame further comprises a pair of elongated pillars, each extending upwards from the lower floor and being mounted between a relative under-door side member and a relative front wheel.

The road car is also provided with an exhaust system to let out the exhaust gases produced by the engine.

Generally speaking, the exhaust system comprises a pair of exhaust ducts, which are connected to the engine, extend under the lower floor of the road car and have respective outlet mouths obtained at the back of the passenger compartment.

The support frame has, for each front wheel, a respective buffer strut, which projects from the passenger compartment parallel to and on the outside of the relative front strut and is aligned with the front wheel parallel to the travel direction of the road car to limit the front wheel getting close to the passenger compartment in case of front crashes of the road car.

Alternatively, when the road car lacks buffer struts, the aforementioned elongated pillars are sized so as to absorb at least part of the kinetic energy produced by a front crash of the road car.

Known road cars of the type described above suffer from some drawbacks, which are mainly due to the fact that the presence of the buffer struts or the dimensions of the aforementioned elongated pillars lead to a relatively large weight of the road car and can compromise the aerodynamic performances of the road car.

### SUMMARY

The object of the invention is to provide a road car that does not suffer from the drawbacks discussed above and can be manufactured in simple and economic fashion.

According to the invention, there is provided a road car as claimed in the appended claims.

### BRIEF DESCRIPTION OF THE DRAWINGS

The invention will now be described with reference to the accompanying drawings showing a non-limiting embodiment thereof, wherein:
figure 1 is a schematic plan view, with parts removed for greater clarity, of a preferred embodiment of the road car according to the invention;
figure 2 is a schematic perspective view, with parts removed for greater clarity, of the road car of figure 1; and
figure 3 is a schematic side view, with parts removed for greater clarity, of a detail of the road car of figures 1 and 2.

### DESCRIPTION OF EMBODIMENTS

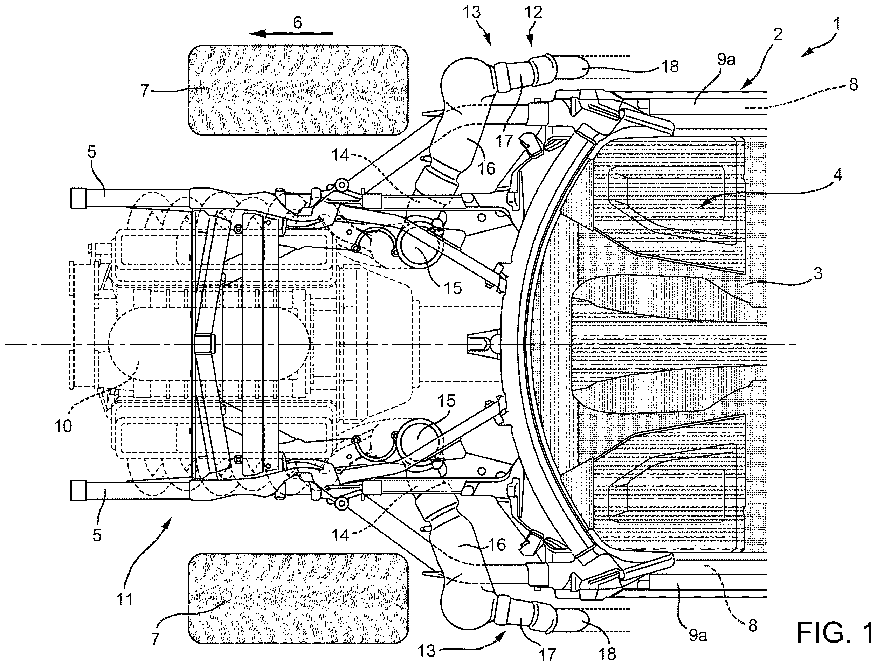

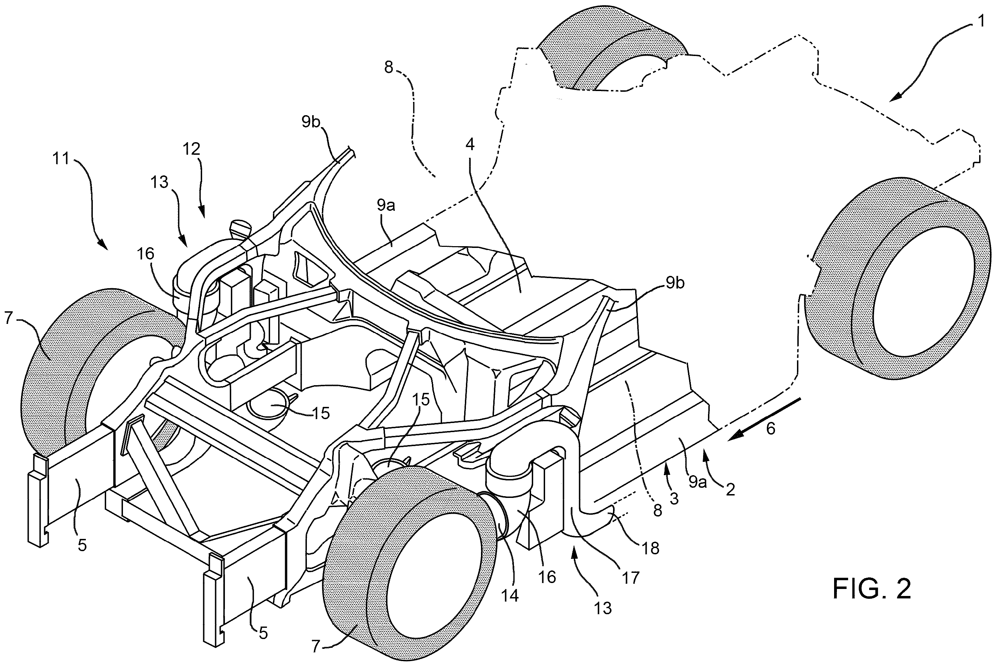

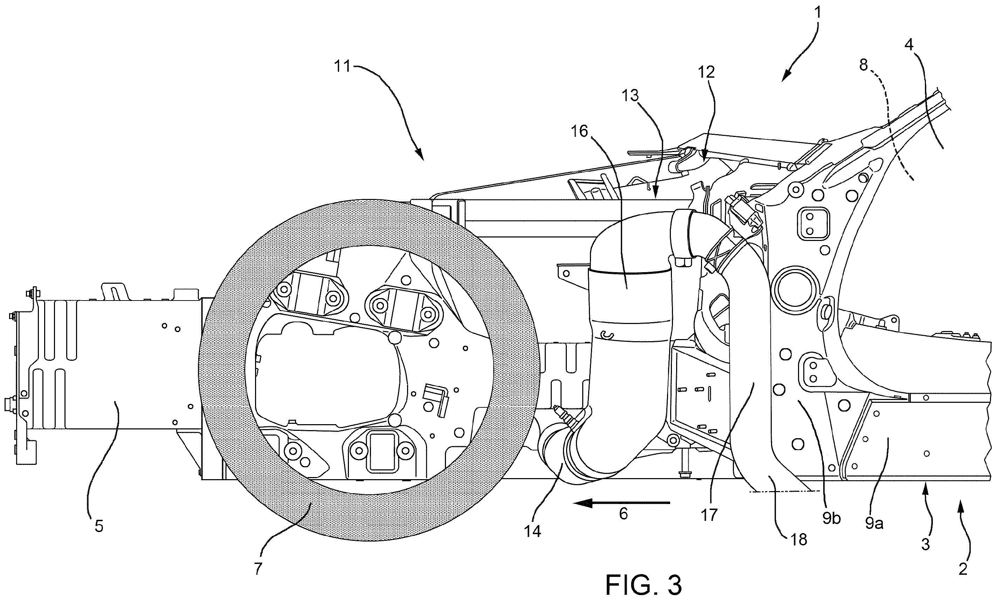

With reference to figures 1, 2 and 3, number 1 indicates, as a whole, a road car comprising a support frame 2 defining at least part of a lower floor 3 of the road car 1 and a passenger compartment 4 mounted on the frame 2 and projecting upwards from the floor 3.

The frame 2 is provided with two front struts 5, which project in front of the passenger compartment 4, extend substantially parallel to a travel direction 6 of the road car 1 and support a front axle provided with two front wheels 7 mounted on the outside of the struts 5.

The passenger compartment 4 is provided with two access doors 8, each extending above an under-door side member 9a with an elongated shape defining part of the frame 2.

Each door 8 is connected to a relative elongated pillar 9b, which extends upwards from the floor 3 and is mounted between the relative side member 9a and the relative wheel 7.

The car 1 further comprises a known engine 10, in this case an internal combustion engine, mounted in a front area 11 of the frame 2, in front of the passenger compartment 4, and in a symmetry plane of the car 1, in particular parallel to the direction 6.

The engine 10 is connected to the wheels 7 in a known way and is associated with an exhaust system 12 to let out the exhaust gases produced by the engine 10.

The system 12 comprises a pair of side exhaust ducts 13, each at least partly extending between a relative under-door side member 9a and a relative wheel 7, being at least partly aligned with the relative wheel 7 parallel to the direction 6 and being configured to absorb at least part of the kinetic energy produced by a front crash of the car 1.

Each duct 13 comprises an inlet segment 14, which has an inlet mouth 15 connected to the motor 10, extends in a substantially horizontal containing plane and projects between the relative wheel 7 and the relative under-door side member 9a.

The duct 13 further comprises an intermediate segment 16 extending upwards from the segment 14 between the relative wheel 7 and the relative under-door side member 9a.

The duct 13 finally comprises an outlet segment 17, which is connected to the segment 16, extends downwards starting from the segment 16 and has an outlet mouth 18 located under a containing plane of the floor 3.

In this case, the segment 16 and the segment 17 extend between the relative wheel 7 and the relative pillar 9b.

The position of the side exhaust ducts 13, in particular of the intermediate segments 16 and of the outlet segments 17, allows the ducts 13 to let out the exhaust gases produced by the engine 10 and, in the event of front crashes of the car 1, to limit the front wheels 7 getting close to the passenger compartment 4 and to absorb at least part of the kinetic energy generated by such front crashes.

As a result, the car 1 has some advantages that are mainly due to the fact that the side exhaust ducts 13 make it possible to avoid the use of auxiliary buffer struts and/or of relatively heavy support frames.

## Claims

1. A road car comprising a support frame (2) defining at least part of a lower floor (3) of the road car; a passenger compartment (4) projecting upwards from the lower floor (3); a front engine (10) mounted in front of the passenger compartment (4); two under-door side members (9a), which define part of the support frame (2) and are each mounted under a relative access door (8) of the passenger compartment (4); a front axle provided with a pair of front wheels (7); and an exhaust system (12) to let out the exhaust gases produced by the engine (10); and **characterized in that** the exhaust system (12) comprises a pair of side exhaust ducts (13), each at least partly extending between a relative under-door side member (9a) and a relative front wheel (7), being at least partly aligned with the relative front wheel (7) parallel to a travel direction (6) of the road car and being configured to at least limit the movement of the relative front wheel (7) following a front crash of the road car.

2. The road car according to claim 1, wherein the engine (10) is mounted in a longitudinal symmetry plane of the road car.

3. The road car according to claim 1 or 2, wherein the support frame (2) comprises two elongated pillars (9b), which extend upwards from the lower floor (3) and are each mounted between a relative under-door side member (9a) and a relative front wheel (7).

4. The road car according to claim 3, wherein each side exhaust duct (13) at least partly extends between a relative elongated pillar (9b) and a relative front wheel (7).

5. The road car according to any one of the preceding claims, wherein each side exhaust duct (13) comprises an inlet segment (14), which has an inlet mouth (15) connected to the engine (10) and projects between the relative front wheel (7) and the relative under-door side member (9), in particular the relative elongated pillar (9b).

6. The road car according to claim 5, wherein the inlet segment (14) extends in a substantially horizontal containing plane.

7. The road car according to claim 5 or 6, wherein each side exhaust duct (13) further comprises an intermediate segment (16) extending upwards from the inlet segment (14) between the relative front wheel (7) and the relative under-door side member (9), in particular the relative elongated pillar (9b).

8. The road vehicle according to claim 7, wherein each side exhaust duct (13) further comprises an outlet segment (17), which is connected to the intermediate segment (16) and extends downwards starting from the intermediate segment (16).

9. The road car according to claim 8, wherein the outlet segment (17) has an outlet mouth (18) located under a containing plane of the lower floor (3).

10. The road car according to any one of the preceding claims, wherein the support frame (2) further comprises two front struts (5), which extend between the front wheels (7) starting from the passenger compartment (4) and carry, connected thereto, the front wheels (7).
